(19) Europäisches Patentamt / European Patent Office / Office européen des brevets

(11) **EP 2 696 333 A1**

(12) **EUROPEAN PATENT APPLICATION**
published in accordance with Art. 153(4) EPC

(43) Date of publication:
**12.02.2014 Bulletin 2014/07**

(51) Int Cl.:
*G08G 1/16* (2006.01)        *B60W 40/06* (2012.01)
*G08G 1/09* (2006.01)

(21) Application number: **11863011.0**

(22) Date of filing: **08.04.2011**

(86) International application number:
**PCT/JP2011/058947**

(87) International publication number:
**WO 2012/137354 (11.10.2012 Gazette 2012/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventor: **YOSHIHAMA, Yuki
Toyota-shi
Aichi 471-8571 (JP)**

(74) Representative: **Winter, Brandl, Fürniss, Hübner,
Röss, Kaiser, Polte - Partnerschaft
Patent- und Rechtsanwaltskanzlei
Bavariaring 10
80336 München (DE)**

(54) **ROAD SHAPE INFERRING SYSTEM**

(57)    A technique, which makes it possible to estimate a curve shape of a road more simply and more accurately, is provided. Disclosed is a road shape estimating system for estimating the shape of the road including a curve easement section in which a radius of curvature changes according to a clothoid curve and a circular curve section in which a radius of curvature is constant. The distance $L_p$ from a curve starting point and the radius of curvature $R_p$ of the curve at a vehicle position in the curve easement section, are determined on the basis of the information from a white line recognition camera of the vehicle, a yaw rate sensor and a wheel speed sensor, and the radius of curvature $R_{real}$ of the circular curve section is determined from an image of a road sign recognition camera. Then, the length $L_{clo}$ of the curve easement section is derived by using the information as described above and a clothoid function to estimate the shape of the road.

**Fig. 3**

START

S101 — ACQUIRE RADIUS OF CURAVATURE $R_p$ AT PRESENT POSTION P FROM WHITE LINE RECOGNITION CAMERA

S102 — CURVE EASEMENT SECTION STARTED? ($|R_p| < C_{st}$?) — NO / YES

S103 — CALCULATE DISTANCE $L_p$ FROM START OF CURVE EASEMENT SECTION TO PRESENT POSTION P
$L_p = \int V_s(t)dt$

S104 — DERIVE $A^2$ FROM $R_p$, $L_p$ ($A^2 = R_p * L_p$)

S105 — $A^2$ CONVERGED? ($|\Delta A^2| < C_a$?) — NO / YES

S106 — CLOTHOID LENGTH $L_{clo} = A^2/R_{real}$
$R(L) = A^2/L$ ($0 \leq L \leq L_{clo}$)
$R(L) = R_{real}$ ($L \geq L_{clo}$)

END

EP 2 696 333 A1

**Description**

TECHNICAL FIELD

The present invention relates to a road shape estimating system for estimating a shape of a road on which a moving object such as an automobile or the like moves, the road having a curvature variation section in which a radius of curvature changes in accordance with a predetermined function and a curvature fixed section in which a radius of curvature is constant.

BACKGROUND ART

In systems such as Curve Speed Warning System (CSWS), Auto Cruise Control (ACC), Lane Keeping Assist System (LKA) and Pre-Crash Safety (PCS), improving the convenience, the safety and the fuel efficiency is demanded. For this purpose, it is required that the accuracy of control be improved, and therefore, for example, it is needed that a road shape, such as a curve shape, be accurately recognized. However, when only a navigation system is used in order to accurately recognize the road shape, there is a problem in terms of achievable positional accuracy. Thus, in this case, in order to supplement the navigation system, countermeasures like increasing node points on a map, upgrading a method for connecting node points, and exercising ingenuity in complex road shape recognition using a millimeter wave sensor have been taken.

In relation to the above described technique, for example, such system that calculates the radius of curvature of a road on the basis of the point data of the road shape within a range that is acquired by road shape acquiring means and initiates deceleration before a curve on the basis of the calculated radius of curvature has been produced on a commercial basis (see, for example, Patent Document 1). Further, such technique that determines the extents of an easement section and a circular section of a curve from navigation data, then calculates the distance between an entering point of the curve and the present position when, judging from the GPS position information, the subject vehicle is in the easement section, and then acquires the radius of curvature of the curve at any arbitrary position by calculating a clothoid parameter from the distance that is obtained from a white line recognition camera, has been devised (see, for example, Patent Document 2).

In the case of the above described technique, however, the car navigation system is used as means for estimating the road shape, thus there is a disadvantage in that its function ceases when the GPS reception is shut off (shadowing). Further, in some cases, the position detection accuracy of GPS is not sufficient. Furthermore, there is a disadvantage in that the number of node points increases or the control logic becomes complicated in order to improve the calculation accuracy of the radius of curvature. Moreover, there is a disadvantage in that when a plurality of roads exists in the vicinity, any mismatches may be caused. Additionally, since the navigation system itself is expensive, there is a case where a large amount of development cost is required in order to overcome the disadvantages as described above.

Further, such technique that detects a curve shape by emitting a millimeter wave or a laser beam to estimate the radius of curvature is also known. However, because this technique is disadvantageous in that: detectable stationary objects are limited depending on the material or the shape of the road side obstacles, its weather robustness is low and a possibility of misestimation increases in complicatedly-shaped roads or complicated environment (including passing persons and bicycles on the road side), it has been difficult to estimate the radius of curvature of the curve more simply and accurately.

CITATION LIST

Patent Documents:

Patent Document 1: JP2004-272426A;
Patent Document 2: JP11-160078A;
Patent Document 3: JP2010-151691A;
Patent Document 4: JP2006-031553A.

SUMMARY OF THE INVENTION

Technical Problem:

The present invention has been made taking the foregoing circumstances into consideration, an object of which is to provide a technique which makes it possible to estimate a curve shape of a road more accurately by means of a simpler method.

Solution to Problem:

The present invention is the one for achieving the above described object, and is related to a road shape estimating system for estimating a shape of a road including a curve in which its curvature changes according to a predetermined function and a curve with a constant curvature, and has the following point as its greatest feature. That is, the present invention determines a distance from the curve's starting point and a radius of curvature of the curve at a predetermined point of the curve with a changing curvature on the basis of information supplied from autonomous sensors of a moving object, and determines a radius of curvature of the curve with a constant curvature. Then, the present invention derives the entire length of the curve with the changing curvature by using the above described information and the predetermined function, and then estimates the shape of the road.

In particular, there is provided a road shape estimating system for estimating a shape of a road on which a moving object moves, the road having a curvature variation section in which a radius of curvature changes in accordance with a predetermined function and a curvature fixed section in which a radius of curvature is constant, the road shape estimating system comprising:

curvature fixed radius acquiring means which acquires the radius of curvature of the curvature fixed section as a curvature fixed radius;

a moving object information sensor which is mounted on the moving object and detects behavior information of the moving object;

curvature variation information acquiring means which acquires a distance from a starting point of the curvature variation section to a predetermined point in the curvature variation section as a curvature variation distance and a radius of curvature of the road at the predetermined point as a curvature variation radius, on the basis of the information detected by the moving object information sensor; and

deriving means which derives a length of the curvature variation section from the curvature variation distance, the curvature variation radius and the curvature fixed radius by using the predetermined function.

Accordingly, the deriving means derives the length of the curvature variation section by using the predetermined function from the curvature fixed radius acquired by the curvature fixed radius acquiring means and from the curvature variation distance and the curvature variation radius acquired by the curvature variation information acquiring means with the use of the moving object information sensor. Therefore, it is possible to estimate the road shape more simply as compared with a case where the length of the curvature variation section is derived by acquiring the curvature variation distance and the curvature variation radius from the information of a car navigator. Further, it is possible to avoid disadvantages such as a shutoff of the GPS reception, an increase in the number of node points and a mismatch when a plurality of roads exists in the vicinity, and thus it is possible to estimate the road shape at a higher accuracy.

In the above recitation, it is also preferable that the curvature fixed radius acquiring means acquires the radius of curvature of the curvature fixed section as the curvature fixed radius on the basis of an image information. Accordingly, the use of the information of the car navigator is not needed when acquiring the curvature fixed radius as well, and thus it is possible to acquire the curvature fixed radius more simply or more accurately. Further, in the above recitation, it is also preferable that the image information is an image of a road sign, and the curvature fixed radius acquiring means has a road sign recognition camera. That is, the radius of curvature of the road ahead is shown on the road sign in some cases, and thus the image of the road sign may be acquired by the road sign recognition camera, and the curvature fixed radius of the road ahead may be acquired from the image of the road sign. Accordingly, it is possible to acquire the curvature fixed radius more simply without adding any special component.

In the above recitation, it is also preferable that the predetermined function is a clothoid curve. In Japan, the clothoid curve is used as the function to define the shape of the curvature variation section. By using the clothoid curve, it is possible to derive the length of the curvature variation section from the curvature variation distance, the curvature variation radius and the curvature fixed radius. The function to define the shape of the curvature variation section may be any other function. For example, a quadric curve is used in the United States. Therefore, it is also allowable that the predetermined function is a quadric curve.

In the present invention, it is also preferable that the predetermined point is a position of the moving object. That is, the road shape estimating system in the present invention may be mounted on the moving object and the curvature variation information acquiring means may acquire the curvature variation distance, which is the distance from the starting point of the curvature variation section to the moving object, and the curvature variation radius at the position of the moving object when the moving object is being positioned in the curvature variation section. By doing so, it is possible for the moving object to estimate the shape of the road on which the moving object itself is running more correctly and more quickly, and thus it is possible to improve the safety and the easiness of the run.

In the present invention, it is also preferable that the curvature variation information acquiring means acquires the curvature variation distance by integrating a velocity of the moving object. By doing so, it is possible to acquire the curvature variation distance more reliably without using the information of the car navigation, and thus it is possible to acquire the curvature variation distance more accurately without being affected by a condition of the road or a condition of the GPS reception.

In the present invention, it is also preferable that the curvature variation information acquiring means has a white line image acquiring device which acquires an image of a white line on the road and acquires the curvature variation radius on the basis of the image of the white line acquired by the white line image acquiring device. Accordingly, it is also possible to acquire the  curvature variation radius without using the information of the car navigation, and thus it is possible to acquire the curvature variation radius more accurately without being affected by a condition of the road or a condition of the GPS reception.

In the present invention, it is also preferable that the curvature variation information acquiring means acquires the curvature variation distance and the curvature variation radius repeatedly at predetermined time intervals while the moving object is moving in the curvature variation section; and

the deriving means calculates a predetermined constant included in the predetermined function repeatedly at the predetermined time intervals, while the moving object is moving in the curvature variation section, from the curvature variation distance and the curvature variation radius acquired by the curvature variation information acquiring means, and derives the length of the curvature variation section after a variation of the constant at the predetermined time intervals has become smaller than a threshold value.

That is, in the present invention, after the moving object enters the curvature variation section and while it is moving, the curvature variation distance and the curvature variation radius are acquired repeatedly by the curvature variation information acquiring means. Then, according to the information thereof, the predetermined  constant, which is included in the predetermined function, is calculated. However, because the value itself of the curvature variation distance is small and the influence of the detection error is large immediately after the moving object enters the curvature variation section, the variation of the calculated predetermined constant may consequently increase. If the length of the curvature variation section is derived in such a condition, there is a case where it cannot be said that the reliability of the derived value is high.

Therefore, in the present invention, the predetermined constant, which is included in the predetermined function, is calculated repeatedly at predetermined intervals while the moving object is moving in the curvature variation section, and the length of the curvature variation section is derived after the variation of the constant at the predetermined intervals has become smaller than a threshold value. Accordingly, after a certain amount of time elapses from the entering of the moving object into the curvature variation section and such condition, in which the sufficiently accurate curvature variation distance and the curvature variation radius can be obtained, is reached, the length of the curvature variation section can be derived. As a result, it is possible to estimate the road shape more accurately.

The solutions for solving the problem according to the present invention can be used in combination as long as it is possible.

EFFECTS OF THE INVENTION

According to the present invention, it is possible to estimate the curve shape of the road more simply and more accurately.

BRIEF DESCRIPTION OF THE DRAWINGS

Fig. 1 is a block diagram illustrating a road shape estimating system according to a first example of the present invention.
Fig. 2 is a diagram to explain an estimating process of the road shape according to the first example of the present invention.
Fig. 3 is a block diagram illustrating a road shape estimating routine according to the first example of the present invention.

MODE FOR CARRYING OUT THE INVENTION

The best mode for carrying out the present invention will be exemplarily explained in detail below with reference to the drawings.

First Example

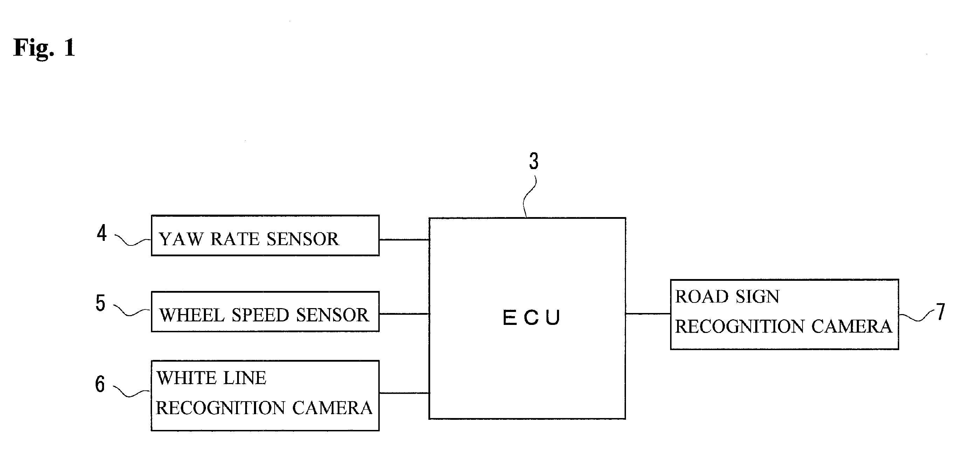

Fig. 1 is a block diagram illustrating a schematic arrangement of a road shape estimating system according to this example. This system is provided with ECU 3 which is an electronic control computer for controlling an internal combustion engine. The ECU 3 is provided with, for example, unillustrated ROM, RAM, CPU, an input port, and an output port, to which a yaw rate sensor 4, a wheel speed sensor 5, a white line recognition camera 6 and a road sign recognition camera 7 are electrically connected. Here, at least the yaw rate sensor 4, the wheel speed sensor 5 and the white line recognition camera 6 correspond to the moving object information sensor(s) according to this example. Further, the white line recognition camera 6 also constitutes the white line image acquiring device according to this example.

A detection signal corresponding to a vehicle yaw rate is provided from the yaw rate sensor 4 to the ECU 3, and a wheel speed pulse synchronized with the rotation of the wheel is provided from the wheel speed sensor 12 to the ECU 3. Further, white lines that divide a travel lane in the vicinity of a vehicle are photographed by the white line recognition camera 6, and road signs are photographed by the road sign recognition camera 7, and then each of the image information (image pickup signals) is provided to the ECU 3. Further, various programs, including a road shape estimating routine described later on, are stored in the ROM of the ECU 3, and the programs are executed by the ECU 3.

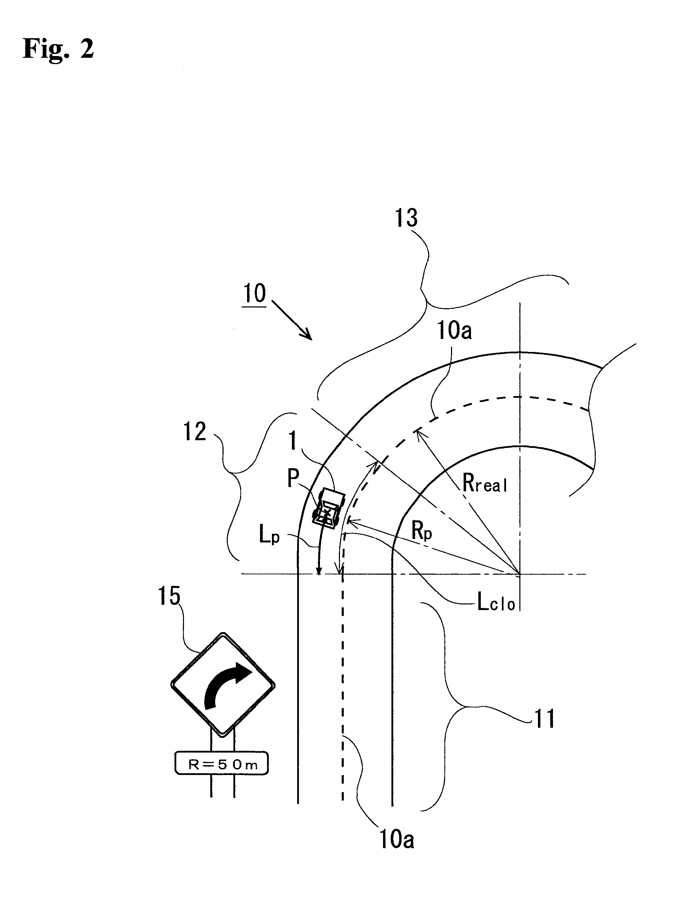

Fig. 2 is a diagram to explain a process of the present invention to be performed when a vehicle 1 approaches a curve of a road 10 during a run. The curve of the road 10 is composed of a straight line section 11, a curve easement section 12 as a curvature variation section which is connected to the straight line section 11 and has a gradually decreasing radius of curvature, and a circular curve section 13 as a curvature fixed section which is connected to the curve easement section 12 and has a minimum and constant radius of curvature. Although a section ahead of the circular curve section 13 is omitted from Fig. 1, the circular curve section 13 is connected to an exit side straight line section via an exit side curve easement section which has a gradually increasing radius of curvature. The curve easement section 12 has a shape which is defined by a clothoid curve.

The clothoid curve is a curve in which a relationship between the distance L from the starting point of the curve and the radius of curvature R is expressed by Equation (1) as follows.

$$L \times R = A^2 \qquad \qquad \ldots\ldots(1)$$

Here, $A^2$ expresses a constant to determine the shape of the clothoid curve. Hereinafter, an explanation will be made regarding a procedure of the road shape estimation according to this example.

With reference to Fig. 2, the vehicle 1 as a moving object is positioned in the curve easement section 12. At the present position P of the vehicle 1, the view ahead of the vehicle 1 is photographed by the white line recognition camera 6, and then, an image of the white line 10a is recognized from the image information of the photographed image. Then, on the basis of the image information of the photographed image, the distance between the white line 10a and the vehicle 1 (white line lateral position) is calculated, and then, on the basis of the calculation result, an attitude of the vehicle 1 with respect to the white line 10a is calculated. Further, the yaw angle of the vehicle 1 is detected from the detection signal obtained by the yaw rate sensor 4, and the velocity V(t) of the vehicle 1 is acquired by detecting the wheel speed pulses from the wheel speed sensor 5. Then, by integrating the velocity V(t) as shown in Equation (2), the distance Lp from the starting point of the curve easement section 12 to the present position P of the vehicle 1 is acquired.

$$Lp = \int V(t)dt \qquad \qquad \ldots\ldots(2)$$

Further, on the basis of the attitude of the vehicle 1 with respect to the white line 10a and the traveling locus, the shape of the white line 10a and the radius of curvature Rp of the road at the present position P are calculated. Known methods are used for the calculation methods, and hence any explanation thereof is omitted herein.

Subsequently, the constant $A^2$ of the clothoid curve is calculated from the obtained values of Rp and Lp as follows.

$$Lp \times Rp = A^2 \qquad \qquad \ldots\ldots(3)$$

In this example, in the straight line section 11 before approaching the curve, a road sign 15 is photographed by the road sign recognition camera 7, and, on the basis of the image information of the photographed image, the radius of curvature Rreal of the circular curve section 13 is acquired. According to this method, the radius of curvature Rreal can be acquired more accurately with the relatively inexpensive road sign recognition camera 7. Further, the road signs can be recognized by a monocular camera, and therefore, by integrating the white line recognition camera 6 and the road sign recognition camera 7, it is possible to simplify the apparatus and reduce the cost. The radius of curvature Rreal corresponds to a curvature fixed radius in this example. Further, the road sign recognition camera 7 and the ECU 3 constitute a curvature fixed radius acquiring means in this example.

Then, the length Lclo of the curve easement section 12 is derived by using Equation (4) as follows.

$$\mathrm{Lclo = A^2/Rreal} \qquad\qquad \ldots\ldots(4)$$

Finally, the curve shape of the road 10 is specified as follows.

$$\mathrm{R(L) = A^2/L \qquad (0 \le L \le Lclo)} \qquad \ldots\ldots(5)$$

$$\mathrm{R(L) = Rreal \quad (L \ge Lclo)} \qquad\qquad \ldots\ldots(6)$$

Here, $A^2$ theoretically is a constant value within a range of the curve easement section 12. However, in the actual estimating process, Lp is small immediately after the start of the curve easement section 12, and hence the error (fluctuation) of Lp becomes greater even when compared with the positional deviation error at a start judgment point of the curve easement section 12. Therefore, it is feared that $A^2$ may change greatly immediately after the start of the curve easement section 12. On the other hand, in this example, as described later on, the convergence judgment is performed for $A^2$. Specifically, when the absolute value of $\Delta A^2$, which indicates the change of $A^2$, becomes smaller than a threshold value, it will be judged that $A^2$ has converged.

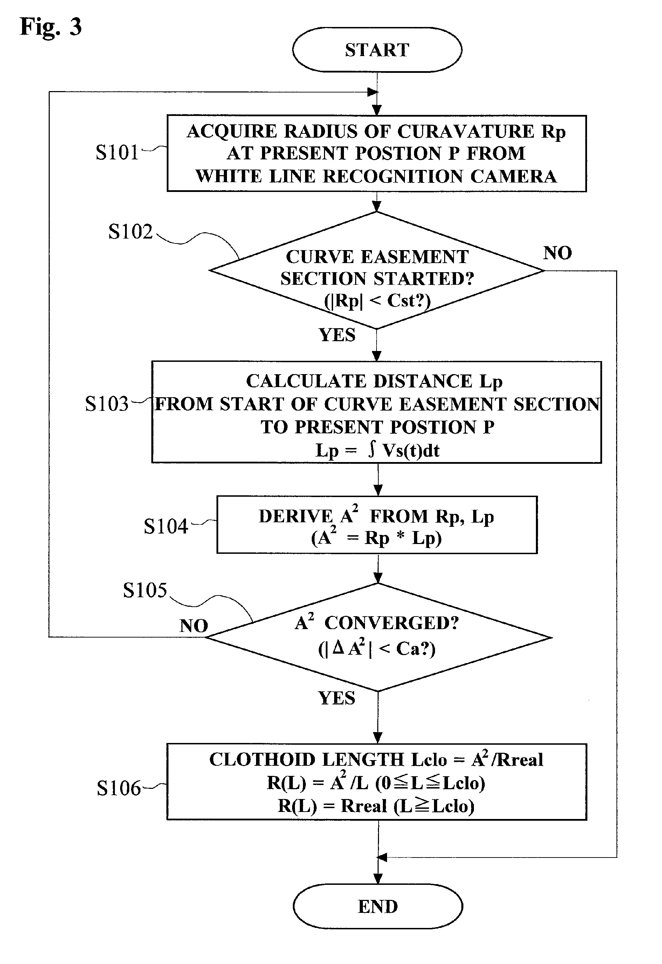

Fig. 3 shows a flow chart of a road shape estimating routine according to this example. This routine is a program stored in the ROM of the ECU 3 as described above, and this routine is executed by the ECU 3 at predetermined time intervals while the vehicle 1 is running. When this routine is executed, firstly in S101, the radius of curvature Rp of the curve is acquired as the curvature variation radius at the present position P on the basis of the image of the white line recognition camera 6. If the process in S101 is completed, the routine proceeds to S102.

In S102, it is judged whether or not the curve easement section 12 has started. Specifically, the judgment is made depending on whether or not the absolute value of Rp acquired in S101 is smaller than a preset threshold value Cst. Here, if the absolute value of Rp is equal to or more than Cst, it is judged that the vehicle 1 is positioned in the straight line section 11 and the curve easement section 12 has not started, and then, the routine is once terminated. On the other hand, if the absolute value of Rp is smaller than Cst, it is judged that the curve easement section 12 has started, and therefore, the routine proceeds to S103. Here, Cst is a threshold value by which a judgment is made that the curve easement section 12 has not started if the absolute value of Rp is equal to or more than Cst. Cst can be determined beforehand theoretically or by experiments.

In S103, the distance from the starting point of the curve easement section 12 to the present position P is calculated by using the vehicle velocity Vs(t). Specifically, Lp as the curvature variation distance is calculated by using the following equation.

$$\mathrm{Lp = \int Vs(t)dt} \qquad\qquad \ldots\ldots(7)$$

If the process in S103 is completed, the routine proceeds to S104.

Subsequently, in S104, the value of $A^2$ is calculated. Specifically, it is calculated from Rp acquired in S101 and Lp calculated in S103 by using the following equation.

$$\mathrm{A^2 = Lp \ x \ Rp} \qquad\qquad \ldots\ldots(8)$$

If the process in S104 is completed, the routine proceeds to S105.

Subsequently, in S105, it is judged whether or not the value of $A^2$ is converged. Specifically, it is judged whether or not the absolute value of a difference $\Delta A^2$, which is the difference between $A^2$ obtained in S105 executed last time and $A^2$ obtained in S105 executed this time, is smaller than Ca which is a preset threshold value. Here, if a negative judgment is made, the routine returns to S101. On the other hand, if an affirmative judgment is made, the routine proceeds to S106. Here, Ca is the threshold value by which a judgment is made that, if the absolute value of the difference $\Delta A^2$ of $A^2$s is smaller than Ca, the value of $A^2$ is sufficiently stabilized and thus there is no problem in terms of the accuracy. Ca may be determined beforehand theoretically or by experiments.

In S106, the length Lclo of the curve easement section 12 is calculated as the length of the clothoid curve as follows.

$$\texttt{Lclo = A}^2\texttt{/Rreal} \qquad\qquad \texttt{.....(9)}$$

Finally, the shape of the curve is calculated as follows.

$$\texttt{R(L) = A}^2\texttt{/L} \quad\texttt{(0} \leq \texttt{L} \leq \texttt{Lclo)} \qquad \texttt{.....(10)}$$

$$\texttt{R(L) = Rreal} \quad\texttt{(L} \geq \texttt{Lclo)} \qquad\qquad \texttt{.....(11)}$$

If the process of S106 is completed, this routine is once terminated.

As explained above, in this example, the length of the curve easement section 12 is calculated from the signals detected by the autonomous sensors such as the white line recognition camera 6, the yaw rate sensor 4 and the wheel speed sensor 5 by using the function of the clothoid curve. Therefore, it is possible to estimate the shape of the road more simply and more accurately without using the information from the car navigation system. In the recitation above, the ECU 3, which executes the processes of S101 to S103, constitutes a curvature variation information acquiring means. Further, the ECU 3, which executes the process of S106, constitutes a deriving means.

Although the white line recognition camera 6, the yaw rate sensor 4 and the wheel speed sensor 5 are used as the sensors in the example described above, it is also allowable to use other sensors, provided that the length of the curve easement section 12 can be calculated without using a car navigation system or GPS. Also, although it is premised that the curve easement section 12 is defined by the function of the clothoid curve in the example described above, the present invention is also applicable to any road in which a curve easement section is defined by other functions. One example of the other functions can be a quadratic function.

Further, in the example described above, the radius of the circular curve section 13 is acquired by using the image information of the road sign recognition camera 7, and therefore, also in this regard, it is possible to estimate the shape of the road more simply and more accurately without using any information from a car navigation system or GPS. However, in the present invention, the method for acquiring the radius Rreal of the circular curve section 13 is not specifically limited, and therefore it is also allowable to use a car navigation system, GPS, a millimeter wave, a laser beam or the like. In the present invention, it is possible to estimate the shape of the road sufficiently simply or accurately, provided that the length of the curve easement section 12 can be calculated without using a car navigation system or GPS.

REFERENCE SIGNS LIST

1: vehicle, 3: ECU, 4: yaw rate sensor, 5: wheel speed sensor, 6: white line recognition camera, 7: road sign recognition camera, 10: curve, 10a: white line, 11: straight line section, 12: curve easement section, 13: circular curve section, 15: road sign.

**Claims**

1. A road shape estimating system for estimating a shape of a road on which a moving object moves, the road having a curvature variation section in which a radius of curvature changes in accordance with a predetermined function and a curvature fixed section in which a radius of curvature is constant, the road shape estimating system comprising:

curvature fixed radius acquiring means which acquires the radius of curvature of the curvature fixed section as a curvature fixed radius;

a moving object information sensor which is mounted on the moving object and detects behavior information of the moving object;

curvature variation information acquiring means which acquires a distance from a starting point of the curvature variation section to a predetermined point in the curvature variation section as a curvature variation distance and a radius of curvature of the road at the predetermined point as a curvature variation radius, on the basis of the information detected by the moving object information sensor; and

deriving means which derives a length of the curvature variation section from the curvature variation distance, the curvature variation radius and the curvature fixed radius by using the predetermined function.

2. The road shape estimating system according to claim 1, wherein the curvature fixed radius acquiring means acquires the radius of curvature of the curvature fixed section as the curvature fixed radius on the basis of an image information.

3. The road shape estimating system according to claim 2, wherein the image information is an image of a road sign, and the curvature fixed radius acquiring means has a road sign recognition camera.

4. The road shape estimating system according to any one of claims 1 to 3, wherein the predetermined function is a clothoid curve.

5. The road shape estimating system according to any one of claims 1 to 4, wherein the predetermined point is a position of the moving object.

6. The road shape estimating system according to claim 5, wherein the curvature variation information acquiring means acquires the curvature variation distance by integrating a velocity of the moving object.

7. The road shape estimating system according to any one of claims 1 to 6, wherein the curvature variation information acquiring means has a white line image acquiring device which acquires an image of a white line on the road and acquires the curvature variation radius on the basis of the image of the white line acquired by the white line image acquiring device.

8. The road shape estimating system according to any one of claims 1 to 7, wherein:

the curvature variation information acquiring means acquires the curvature variation distance and the curvature variation radius repeatedly at predetermined time intervals while the moving object is moving in the curvature variation section; and

the deriving means calculates a predetermined constant included in the predetermined function repeatedly at the predetermined time intervals, while the moving object is moving in the curvature variation section, from the curvature variation distance and the curvature variation radius acquired by the curvature variation information acquiring means, and derives the length of the curvature variation section after a variation of the constant at the predetermined time intervals has become smaller than a threshold value.

**Fig. 1**

ROAD SIGN RECOGNITION CAMERA 7

ECU 3

YAW RATE SENSOR 4

WHEEL SPEED SENSOR 5

WHITE LINE RECOGNITION CAMERA 6

# Fig. 2

## Fig. 3

START

S101 — ACQUIRE RADIUS OF CURAVATURE Rp
AT PRESENT POSTION P FROM
WHITE LINE RECOGNITION CAMERA

S102 — CURVE EASEMENT
SECTION STARTED?
($|Rp| < Cst?$)

NO

YES

S103 — CALCULATE DISTANCE Lp
FROM START OF CURVE EASEMENT SECTION
TO PRESENT POSTION P
$Lp = \int Vs(t)dt$

S104 — DERIVE $A^2$ FROM Rp, Lp
($A^2 = Rp * Lp$)

S105 — $A^2$ CONVERGED?
($|\Delta A^2| < Ca?$)

NO

YES

S106 — CLOTHOID LENGTH $Lclo = A^2/Rreal$
$R(L) = A^2/L$ ($0 \leqq L \leqq Lclo$)
$R(L) = Rreal$ ($L \geqq Lclo$)

END

<table>
<tr><td colspan="3" align="center">**INTERNATIONAL SEARCH REPORT**</td><td colspan="2">International application No.<br>PCT/JP2011/058947</td></tr>
</table>

**A. CLASSIFICATION OF SUBJECT MATTER**
*G08G1/16*(2006.01)i, *B60W40/06*(2006.01)i, *G08G1/09*(2006.01)i

According to International Patent Classification (IPC) or to both national classification and IPC

**B. FIELDS SEARCHED**

Minimum documentation searched (classification system followed by classification symbols)
G08G1/16, B60W40/06, G08G1/09

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 11-160078 A (Toyota Motor Corp.),<br>18 June 1999 (18.06.1999),<br>paragraphs [0018] to [0025], [0031]; fig. 2, 3<br>(Family: none) | 1,4,5,7<br>2,3,6<br>8 |
| Y | JP 7-266920 A (Isuzu Motors Ltd.),<br>17 October 1995 (17.10.1995),<br>paragraphs [0016], [0017]<br>(Family: none) | 2,3 |
| Y | JP 2007-233604 A (Toyota Motor Corp.),<br>13 September 2007 (13.09.2007),<br>paragraph [0040]<br>(Family: none) | 6 |

[X] Further documents are listed in the continuation of Box C.     [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 April, 2011 (26.04.11) | Date of mailing of the international search report<br>17 May, 2011 (17.05.11) |
|---|---|
| Name and mailing address of the ISA/<br>  Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/058947 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-151692 A  (Aisin AW Co., Ltd.),<br>08 July 2010 (08.07.2010),<br>paragraphs [0035] to [0037], [0050], [0091]<br>(Family: none) | 1-8 |
| A | JP 2011-34508 A  (Advics Co., Ltd.),<br>17 February 2011 (17.02.2011),<br>paragraphs [0045], [0048]; fig. 4<br>(Family: none) | 1-8 |
| A | JP 10-283597 A  (Honda Motor Co., Ltd.),<br>23 October 1998 (23.10.1998),<br>paragraph [0023]<br>& US 6141617 A          & DE 19816133 A1 | 7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004272426 A
- JP 11160078 A
- JP 2010151691 A
- JP 2006031553 A